**Europäisches Patentamt**

**European Patent Office**

**Office européen des brevets**

(19)

(11) Publication number: **0 159 600**
A2

(12) # EUROPEAN PATENT APPLICATION

(21) Application number: **85104156.6**

(22) Date of filing: **04.04.85**

(51) Int. Cl.⁴: **B 32 B 25/00, C 23 C 18/36**

(30) Priority: **06.04.84 IT 6734584**

(43) Date of publication of application: **30.10.85**
**Bulletin 85/44**

(84) Designated Contracting States: **AT BE CH DE FR GB IT LI LU NL SE**

(71) Applicant: **THE FIRESTONE TIRE & RUBBER COMPANY, 1200 Firestone Parkway, Akron, Ohio 44317 (US)**

(72) Inventor: **Rugo, Giansante, Via S. Quasimodo, 40, I-00100 Roma (IT)**

(74) Representative: **Kraus, Walter, Dr. et al, Patentanwälte Kraus Weisert & Partner Thomas-Wimmer-Ring 15, D-8000 München 22 (DE)**

(54) Method for bonding rubber to bright steel.

(57) A method for bonding rubber to bright steel is provided. The method involves first depositing a coating of cobalt on bright steel by electroless desposition from an aqueous cobalt salt solution having a temperature of from about 70°C to about 100°C. The cobalt-coated steel is contacted with the rubber to be bonded and the rubber is then bonded to the cobalt-coated steel using heat and pressure. The resultant rubber-steel composite exhibits excellent rubber-to-steel adhesion.

EP 0 159 600 A2

# METHOD FOR BONDING RUBBER TO BRIGHT STEEL

## BACKGROUND OF THE INVENTION

The invention relates to a method of bonding rubber to bright steel. More particularly, the invention relates to a method of bonding rubber to bright steel in which a coating of cobalt is deposited on bright steel by electroless deposition from a cobalt salt solution having a temperature of from about 70°C to about 100°C, the rubber and cobalt-coated steel are brought into contact with each other and the rubber is then bonded to the cobalt-coated steel by applying heat and pressure.

Methods of bonding rubber to metal in which metallic coatings are first applied to the metal by electroless deposition prior to the bonding step are known in the art. Thus, U.S. Patent No. 3,858,635 relates to a composite of a vulcanized rubber and a metallic material which is prepared by a process which involves first plating or coating a metallic material with a metal of Group IV of the Periodic Table by chemical plating (i.e., electroless deposition), contacting the metal coated metallic material with an unvulcanized rubber and then curing the unvulcanized rubber. Group IV metals which may be employed in the chemical plating step include tin, lead, titanium, hafnium, and germanium. U.S. Patent No. 4,096,009 relates to a method of bonding rubber to a ferrous metal substrate which involves first depositing a copper layer on the substrate from a copper salt solution free of cupric halide by either electroless deposition or electrodeposition, applying a polymeric adhesive with the rubber to be bonded and bonding by heat and pressure.

In addition, several cobalt salt solutions or plating baths for use in electroless deposition are known. Thus, U.S. Patent No. 3,432,338 relates to solutions of cobalt salts, nickel salts, and cobalt-nickel salts which contain a source of fluoroborate ions. The patent discloses that cobalt, nickel or cobalt-nickel alloys may be deposited from the solutions onto aluminum or magnesium substrates or onto non-metallic substrates. An english language version of an article entitled "Modern Problems of Metal Deposition By Reduction With Hypophosphite" authored by K. M. Gorbunova, A. A. Nikiforova and G. A. Sadakov which appears to have been taken from an article by the same authors appearing in the Russian publication Itogi Nauki Elektrokhim 1966 (published 1968) discloses an electroless plating solution containing from 0.016-0.163 moles per liter (mol/l) of hypophosphite, 0.0315 mol/l of cobalt chloride, 0.23 mol/l of ammonium chloride and 0.094 mol/l of citric acid.

## SUMMARY OF THE INVENTION

In accordance with the present invention, a method of bonding rubber to bright steel is provided which comprises the steps of:

(a) depositing a coating of cobalt on bright steel by electroless deposition from an aqueous cobalt salt solution having a temperature of fron about 70°C to about 100°C;

(b) contacting the resultant cobalt-coated steel with the rubber to be bonded; and

(c) bonding the rubber to the cobalt-coated steel using heat and pressure.

## DETAILED DESCRIPTION OF THE INVENTION

The term "bright steel" as employed throughout the specification and claims means bare or unplated steel.

Rubber which may be bonded to bright steel in accordance with the method of the invention are vulcanizable rubbers. Suitable vulcanizable rubbers which may be employed include natural rubber and synthetic rubbers such as styrenebutadiene rubber (SBR) or polybutadiene rubber. Blends of natural rubber and synthetic rubber may also be utilized. Such vulcanizable rubbers may contain additives which are conventionally employed in rubber compounds such as, for example, reinforcing agents, fillers, vulcanizing agents, plasticizers, antioxidants and the like.

In addition, the rubber compound itself may contain conventional rubber to metal adhesion promoters such as cobalt naphthenate, cobalt carboxylates, and other metal salts.

Aqueous cobalt salt solutions which may be employed in the deposition step of the method of the invention include any of those in which cobalt may be deposited on a metal substrate by electroless deposition. A preferred aqueous cobalt salt solution is an alkaline cobalt salt solution containing 7.48 grams per liter (g/l) of cobalt chloride, 3.32 g/l of sodium hypophosphite, 12.40 g/l of ammonium chloride and 18.00 g/l of citric acid.

The aqueous cobalt salt solution should be alkaline in nature in order to achieve the most efficient and rapid deposition of cobalt during the electroless deposition procedure. Thus, the aqueous cobalt salt solution should have a pH of at least 8.2. The solutions may have pH's of from 8.2 to about 10.0. In addition, it is important that the pH of the solutions be maintained at a pH of 8.2 or above during the deposition procedure. Should the pH of the solution drop below 8.2 during deposition, it can be adjusted to the desired level by the addition of an appropriate basic compound such as sodium hydroxide.

The temperature of the aqueous cobalt salt solution during deposition is also important in achieving the most rapid and efficient deposition of cobalt on the bright steel substrate. Thus, the temperature of the solution during deposition should be from about 70°C to about 100°C, preferably from 80 to 90°C.

The electroless deposition procedure may be conducted in any known manner. Thus, the bright steel substrate material may be dipped or immersed in the aqueous cobalt salt solution. The dipping or immersion time will vary depending on the precise composition of the aqueous cobalt salt solution and the temperature of the solution. In general, immersion times may range from about 1 minute to about 20 minutes.

The resultant cobalt-coated steel is then contacted with the rubber to be bonded by conventional means. The bonding of the rubber to the cobalt-coated steel is accomplished by vulcanizing the rubber under heat and pressure using conventional temperatures and pressures employed to vulcanize rubber compounds.

The following examples are submitted for the purpose of further illustrating the nature of the present invention and are not to be regarded as a limitation on the scope thereof.

## EXAMPLES 1-4

In these examples, samples of bright (i.e. bare) steel cord wires were coated with cobalt by immersing them in an aqueous cobalt salt solution having a pH of 8.2 and a temperature of 80°C. The aqueous cobalt salt solution had the following composition in grams per liter (g/l): cobalt chloride = 7.48 g/l, sodium hypophosphite = 3.32 g/l, ammonium chloride = 12.40 g/l and citric acid = 18.00 g/l. In order to determine the effect of immersion time, the samples of bright steel cord wires were immersed for varying periods of time. The resultant cobalt-coated steel cord wires were then placed between two sheets of unvulcanized rubber compound having the formulation shown in Table I, and the resultant composites are then placed in molds and vulcanized at 150°C for 35 minutes to form a steel cord wire pull-out adhesion pad. The preparation of the adhesion pads and the adhesion test were conducted in accordance with the procedure described in ASTM D2229. For comparative purposes, a control using the same rubber compound formulation but without the cobalt coating on the steel cord wire was included.

In addition to adhesion values, the amount of rubber remaining on the wire following wire pull-out was observed and reported as percent coverage. Immersion times, adhesion results and percent coverage are shown in Table II.

## TABLE I

| Rubber Compound Formulation | Parts By Weight |
|---|---|
| Natural Rubber | 80.00 |
| Polybutadiene | 20.00 |
| Low Structure HAF | 65.00 |
| Stearic Acid | .50 |
| Aromatic Oil | 2.00 |
| Hydrocarbon Resin | 3.00 |
| Antioxidants | 3.00 |
| Cobalt Naphthenate | 1.00 |
| Zinc Oxide | 8.00 |
| Sulfur | 2.80 |
| Sulfenamide Accelerator | 0.80 |
| Reactive Resin | 4.00 |

## TABLE II

| Ex. No. | Steel Cord Immersion Time (Min.) | Adhesion Kg/½ Inch | Percent Coverage |
|---|---|---|---|
| Control | 0 | 2 | 0 |
| 1 | 5 | 60/60 | 75/80 |
| 2 | 10 | 68/62 | 75/80 |
| 3 | 15 | 76/60 | 80/80 |
| 4 | 20 | 72/62 | 85/80 |

## EXAMPLE 5

In this example, Example 2 above was substantially repeated with the exception that adhesion was determined both at room temperature (normal) and after aging adhesion pads in an oxygen bomb at 300 psi bomb pressure at 70°C for 6, 16, and 48 hours in a 100% oxygen atmosphere. Adhesion results were as follows:

| Adhesion | Kg/½ Inch | Percent Coverage |
|---|---|---|
| Normal | 54 | 60 |
| After  6 Hrs. $O_2$ | 53 | 70 |
| After 16 Hrs. $O_2$ | 52 | 70 |
| After 48 Hrs. $O_2$ | 54 | 70 |

EXAMPLE 6

In this example, samples of bright steel cord wires were coated with cobalt by immersing them in the aqueous cobalt salt solution of Examples 1-4 for a period of 10 minutes.  The resultant cobalt-coated steel cord wires were then placed between two sheets of unvulcanized rubber compound having the formulations shown in Table III.  The resultant composite was then placed in a mold and vulcanized as in Examples 1-4 to form steel cord wire pull-out adhesion pads.  The adhesion pads were tested for wire pull-out adhesion under normal conditions as in Examples 1-4 and after aging in an oxygen bomb as in Example 5.  Adhesion test results are shown in Table IV.

TABLE III

| Rubber Compound Formulation | Parts By Weight |
|---|---|
| Natural Rubber | 100.00 |
| H.A.F. | 65.00 |
| Stearic Acid | 0.50 |
| Aromatic Oil | 2.00 |
| Hexamethylene Tetramine | 1.00 |
| Resorcinol | 2.00 |
| Antioxidants | 3.00 |
| Cobalt Naphthenate | 1.50 |
| Zinc Oxide | 10.00 |
| Sulfur | 3.00 |
| Sulfenamide Accelerator | 0.80 |

-8-

## TABLE IV

| Adhesion | Kg/½ Inch | Percent Coverage |
|----------|-----------|------------------|
| Normal | 85 | 90 |
| After 6 Hrs. $O_2$ | 75 | 100 |
| After 16 Hrs. $O_2$ | 62 | 50 |
| After 48 Hrs. $O_2$ | 54 | 30 |

In comparison to the above adhesion values, typical adhesion of the above rubber compound to brass plated steel under normal conditions is 85 Kg/½ inch with 90% coverage and after 48 hours $O_2$ is 26 Kg/½ inch with 0% coverage.

CLAIMS:

1. A method for bonding rubber to bright steel comprising the steps of:

(a) depositing a coating of cobalt on bright steel by electroless deposition from an aqueous cobalt salt solution having a temperature of from about 70°C to about 100°C;

(b) contacting the resultant cobalt-coated steel with the rubber to be bonded; and

(c) bonding the rubber to the cobalt-coated steel using heat and pressure.

2. The method of claim 1 wherein said electroless deposition is conducted by immersing the bright steel in said aqueous cobalt salt solution.

3. The method of claim 1 wherein said aqueous cobalt salt solution has a pH of at least 8.2.

4. The method of claim 1 wherein said aqueous cobalt salt solution has a temperature of 80°C to 90°C.

5. The method of claim 1 wherein said rubber to be bonded is natural rubber, synthetic rubber or a blend of natural rubber and synthetic rubber.

6. The method of claim 1 wherein said aqueous cobalt salt solution comprises 7.48 g/l of cobalt chloride, 3.32 g/l of sodium hypophosphite, 12.40 g/l of ammonia chloride and 18.00 g/l of citric acid.